# EUROPÄISCHE PATENTSCHRIFT

(11) **EP 2 296 440 B1**
(45) Veröffentlichungstag und Bekanntmachung des Hinweises auf die Patenterteilung: **01.03.2017**
(21) Anmeldenummer: 10165656.9
(22) Anmeldetag: 11.06.2010
(51) Int. Cl.: H05B 33/08, B60Q 1/00

(54) **Verfahren und Schaltungsanordnung zur Ausfallerkennung von Leuchtdioden**
Method and apparatus for detecting failure of LEDs
Procédé et dispositif de reconnaissance de pannes de diodes electroluminescentes

(30) Priorität: 19.06.2009 DE 102009029909
(43) Veröffentlichungstag der Anmeldung: 16.03.2011
(73) Patentinhaber: Hella KGaA Hueck & Co., 59552 Lippstadt (DE)
(72) Erfinder: Müller, Dipl.-Ing. Alexander, 33104, Paderborn (DE); Schäfers, Dipl.-Ing. Thomas, 33104, Paderborn (DE)
(74) Vertreter: Ostermann, Thomas

(56) Entgegenhaltungen:
- DE-A1-102006 018 575
- US-A1- 2008 231 198

## Beschreibung

Die Erfindung betrifft ein Verfahren zur Ausfallerkennung von Leuchtdioden in einem Fahrzeug, wobei eine Zustandsgröße eines die mindestens eine Leuchtdiode aufweisenden Leuchtdiodenzweiges verglichen wird mit einem Vergleichswert und dass in Abhängigkeit von diesem Vergleich ein Ausfallerkennungssignal erzeugt wird.

Ferner betrifft die Erfindung eine Schaltungsanordnung für die Ausfallerkennung von Leuchtdioden einer Beleuchtungsvorrichtung in einem Fahrzeug mit mindestens einem Leuchtdiodenzweig enthaltend eine Anzahl von Leuchtdioden und einer Ausfallerkennungseinrichtung, die Mittel zum Viergleichen einer Zustandsgröße des Leuchtdiodenzweiges mit einem Vergleichswert und Mittel zum Schalten zur Ausgabe eines Ausfallerkennungssignals in Abhängigkeit von dem Vergleich zwischen der Zustandsgröße des Leuchtdiodenzweiges und dem Vergleichswert aufweist.

Aus der DE 101 31 824 A1 ist eine Schaltungsanordnung zur Ausfallerkennung von Leuchtdioden in einem Fahrzeug bekannt, bei der eine Ausfallerkennungseinrichtung parallel geschaltet zu einem mindestens einen Leuchtdiodenzweig angeordnet ist. Die Ausfallerkennungseinrichtung weist einen jeweils den Leuchtdiodenzweigen zugeordneten Komparator auf, dessen einer Eingang mit einem zu den Leuchtdiodenzweigen parallelen Referenzzweig und dessen anderer Eingang mit einem Anschluss des Leuchtdiodenzweiges verbunden ist, der zwischen den Leuchtdioden und einem Vorwiderstand angeordnet ist. Es werden Potentiale zum einen als Zustandsgröße der Leuchtdiodenzweige und zum anderen als Vergleichswert des Referenzzweiges miteinander verglichen, wobei in Abhängigkeit von der Potentialdifferenz ein Ausfallerkennungssignal mittels der Komparatoren erzeugt wird.

Die DE 10 2006 018575 A1 zeigt ein Verfahren bzw. ein Schaltung gemäss der Präambel des Anspruchs 1 bzw. 3.

Aufgabe der vorliegenden Erfindung ist es, ein Verfahren zur Ausfallerkennung von Leuchtdioden und eine Schaltungsanordnung derart anzugeben, dass ausfallende Leuchtdioden auf kostengünstige Weise unabhängig von der veränderlichen Eingangsspannung eines Kfz-Bordnetzes erkannt werden können.

Zur Lösung dieser Aufgabe ist das erfindungsgemäße Verfahren in Verbindung mit dem Oberbegriff des Patentanspruchs 1 dadurch gekennzeichnet, dass als Zustandsgröße ein durch den Leuchtdiodenzweig fließender Zweigstrom erfasst wird und dass ein Ausfallerkennungssignal erzeugt wird, sobald der Zweigstrom den Vergleichswert unterschreitet, und dass bei Einschalten des Leuchtdiodenzweiges der Vergleich der Zustandsgröße zu dem Vergleichswert so lange verzögert wird, bis an der mindestens einen sich in dem Leuchtdiodenzweig befindlichen Leuchtdiode eine Durchlassspannung erreicht oder überschritten wird.

Der besondere Vorteil der Erfindung besteht darin, dass eine zuverlässige und kostengünstige Ausfallerkennung von Leuchtdioden gewährleistet ist. Grundgedanke der Erfindung ist es, als Zustandsgröße einen in dem jeweiligen Leuchtdiodenzweig fließenden Zweigstrom für die Ermittlung eines Ausfallerkennungssignals heranzuziehen. Als Vergleichsgröße dient ein vorgegebener Stromschwellwert, wobei Mittel vorgesehen sind, dass bei Unterschreiten dieses StromSchwellwertes durch den Leuchtdiodenzweigstrom ein Ausfallerkennungssignal erzeugt wird, das vorzugsweise als ein Stromsignal ausgebildet ist. Da zur Erzeugung des Ausfallerkennungssignals ein zu dem Leuchtdiodenzweig paralleler Stromzweig erforderlich ist, durch den im Normal-Schaltzustand ein Strom fließt, sind zusätzlich Mittel vorgesehen, die sicherstellen, dass der Ausfallerkennungsstrom frühestens erst dann fließen kann, wenn an mindestens einer Leuchtdiode des Leuchtdiodenzweiges eine Flussspannung anliegt. Hierdurch wird sichergestellt, dass nicht bereits beim Einschalten der Leuchtdioden das Ausfallerkennungssignal erzeugt und damit fälschlicherweise einen Leuchtdiodenausfall diagnostiziert wird.

Nach einer bevorzugten Ausführungsform der Erfindung wird das Ausfallerkennungssignal dazu genutzt, eine Ausschalteinheit zu aktivieren, so dass bei Erkennung eines Leuchtdiodenausfalls alle Leuchtdiodenzweige abgeschaltet werden. Vorteilhaft kann hierdurch in Abhängigkeit von dem Vorliegen eines Ausfallerkennungsstromes direkt eine Abschaltung erfolgen.

Zur Lösung der Aufgabe ist die erfindungsgemäße Schaltungsanordnung in Verbindung mit dem Oberbegriff des Patentanspruchs 3 dadurch gekennzeichnet, dass als Mittel zum Vergleichen und Schalten vorgesehen sind eine Stromvergleichseinheit, in der als die Zustandsgröße ein durch den Leuchtdiodenzweig fließender Zweigstrom auf Unterschreiten eines vorgegebenen Schwellwertes überprüft wird und in der bei Unterschreiten des Schwellwertes das Ausfallerkennungssignal erzeugt wird, und eine Verzögerungseinheit, die derart auf die Stromvergleichseinheit einwirkt, dass die Stromvergleichseinheit nur dann aktiviert wird, wenn an mindestens einer der im Leuchtdiodenzweig befindlichen Leuchtdioden eine Durchlassspannung erreicht oder überschritten wird.

Der besondere Vorteil der erfindungsgemäßen Schaltungsanordnung besteht darin, dass eine zuverlässige Schaltung bereitgestellt wird, um unabhängig von der Betriebsspannung den Ausfall von einer oder mehreren Leuchtdioden einer Beleuchtungsvorrichtung zu ermöglichen. Nach der Erfindung kann der Ausfall von Leuchtdioden bereits bei geringen Eingangsspannungen bzw. bei geringen Leuchtdiodenzweigströmen erfolgen. Nach der Erfindung ist zum einen eine Stromvergleichseinheit vorgesehen, mittels derer ein aktueller Leuchtdiodenzweigstrom mit einem vorgegebenen Schwellwert verglichen wird. Ein Ausfallerkennungssignal wird erzeugt, sobald der Schwellwert unterschritten wird. Zum anderen ist eine Verzögerungseinheit vorgesehen, die auf die Stromvergleichseinheit derart einwirkt, dass ein Ausfallerkennungssignal nur erzeugt werden kann, wenn an mindestens einer Leuchtdiode die Flussspannung anliegt. Hierdurch wird sichergestellt, dass nicht bereits beim Einschalten der Beleuchtungsvorrichtung ein Ausfallerkennungssignal erzeugt wird, das fälschlicherweise einen Ausfall mindestens einer Leuchtdiode vorgibt.

Nach einer bevorzugten Ausführungsform der Erfindung ist das Ausfallerkennungssignal als ein Ausfallerkennungsstrom ausgebildet, der bei Ausfallerkennung auf eine Abschalteinheit derart einwirkt, dass alle Leuchtdiodenzweige abgeschaltet werden. Somit wird bei Vorliegen des Ausfallerkennungsstroms selbsttätig eine Abschaltung aller Leuchtdiodenzweige gewährleistet.

Nach einer Weiterbildung der Erfindung weist die Stromvergleichseinheit mindestens ein Schaltelement auf, das in Abhängigkeit von Leuchtdiodenzweigströmen entweder in einen Normal-Schaltzustand oder in einem Ausfall-Schaltzustand versetzt wird. Im Normal-Schaltzustand wird kein Ausfallerkennungssignal; im Ausfall-Schaltzustand wird das Ausfallerkennungssignal erzeugt. Vorteilhaft ermöglicht das Schaltelement zum einen einen Vergleich zwischen dem Zweigstrom und einem Schwellwert und zum anderen durch Schalten das Bereitstellen eines Ausfallerkennungssignals.

Nach einer Weiterbildung der Erfindung bei Verwendung einer Beleuchtungsvorrichtung zur Fahrtrichtungsanzeige ist in der Abschalteinheit ein Ausfall-Schaltzustandshalter integriert, der ein Schaltelement der Abschalteinheit so lange in den Ausfall-Schaltzustand versetzt, bis ein weiterer Betriebsspannungsimpuls an dem Leuchtdiodenzweig anliegt. Somit wird das Ausfallerkennungssignal für eine vorgegebene bzw. einstellbare Zeit gespeichert, was ein unerwünschtes "Aufblitzen" der Beleuchtungsvorrichtung infolge wiederholter Ausfallerkennung verhindert.

Ein Ausführungsbeispiel der Erfindung wird nachfolgend anhand der Zeichnungen näher erläutert.

Es zeigen:
- Figur 1: eine Schaltungsanordnung gemäß der Erfindung und
- Figur 2: ein Zeitdiagramm.

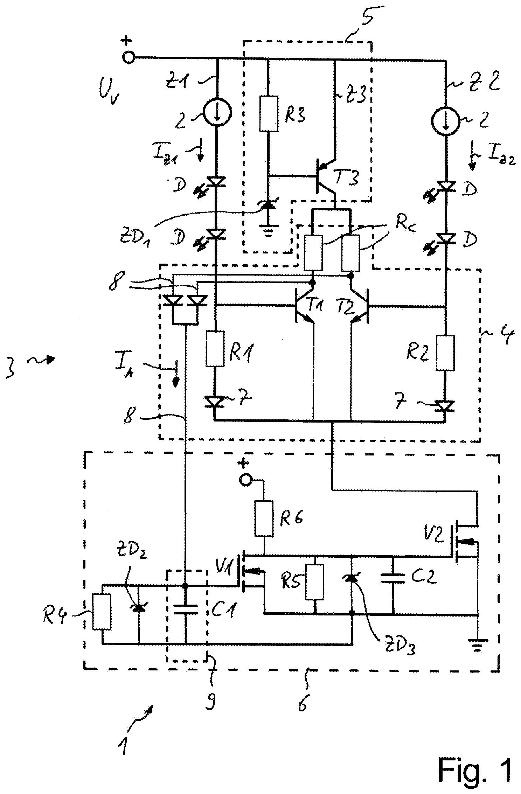

Figur 1 zeigt eine Schaltungsanordnung 1 für die Ausfallerkennung von Leuchtdioden D, die Bestandteil einer Beleuchtungsvorrichtung für ein Kraftfahrzeug sind. Die Beleuchtungsvorrichtung kann beispielsweise zur Erzeugung eines Fahrtrichtungsanzeigers (Blinklichtfunktion) dienen. Die Beleuchtungsvorrichtung kann als Signalleuchte, beispielsweise als Schlusslicht, Bremslicht etc. oder als Scheinwerfer ausgebildet sein.

Im vorliegenden Ausführungsbeispiel dient die Beleuchtungsvorrichtung zur Bildung einer Fahrtrichtungsanzeigefunktion. An ein Kfz-Bordnetz sind zwei Leuchtdiodenzweige Z1, Z2 vorgesehen, die jeweils über zwei in Reihe geschaltenten Leuchtdioden D verfügen. Die Leuchtdiodenzweige Z1, Z2 verfügen jeweils über eine Stromquelle 2, so dass bei eingeschalteter Beleuchtungsvorrichtung ein Strom I_{Z1} in dem ersten Leuchtdiodenzweig Z1 und ein Strom I_{Z2} in dem zweiten Leuchtdiodenzweig Z2 fließt. Die Ströme I_{Z1}, I_{Z2} sind vorzugsweise gleich groß.

Den Leuchtdiodenzweigen Z1, Z2 ist eine Ausfallerkennungseinrichtung 3 zugeordnet, mittels derer aufgrund eines Stromvergleiches beide Leuchtdiodenzweige Z1, Z2 abgeschaltet werden, sofern der Ausfall mindestens einer der Leuchtdioden D erkannt wird. Die Ausfallerkennungseinrichtung 3 umfasst eine Stromvergleichseinheit 4, eine Verzögerungseinheit 5 sowie eine Abschalteinheit 6.

Die Stromvergleichseinheit 4 umfasst zwei bipolare Transistoren T1, T2, die parallel zueinander in einem dritten Zweig Z3 angeordnet sind. Die Transistoren T1, T2 sind jeweils als Emitterschaltung ausgebildet, wobei die Basis des ersten Transistors T1 mit dem ersten Leuchtdiodenzweig Z1 und die Basis des zweiten Transistors T2 mit dem zweiten Leuchtdiodenzweig Z2 verbunden ist. Die Basisspannung der npn-Transistoren T1, T2 wird bestimmt durch den Widerstand R1 des ersten Leuchtdiodenzweiges Z1 bzw. den Widerstand R2 des zweiten Leuchtdiodenzweiges Z2. In Reihe zu den Widerständen R1, R2 ist jeweils eine Diode 7 geschaltet.

Wird die Beleuchtungsvorrichtung durch einen nicht dargestellten Schalter eingeschaltet, wobei die Leuchtdiodenzweige Z1, Z2 an der Versorgungsspannung Uᵥ (Bordnetzspannung) anliegen, fließen im Normalfall die Ströme I_{Z1}, I_{Z2}, wobei die Leuchtdioden D jeweils Licht abstrahlen zur Erzeugung der vorgegebenen Lichtfunktion. In diesem Fall befinden sich die Transistoren T1, T2 in einem durchleitenden Normal-Schaltzustand, in dem ein Strom I_{Z3} durch den dritten Stromzweig Z3 fließt. Der Strom IZ3 wird durch die Kollektorwiderstände R_{C} begrenzt.

Fällt einer der Leuchtdioden D wegen eines Defektes aus, beispielsweise eine der Leuchtdioden D in dem ersten Leuchtdiodenzweig Z1, fließt durch den ersten Leuchtdiodenzweig Z1 ein minimaler Strom (I_{Z1} = 0), so dass die Basisspannung des ersten Transistors T1 zur Null wird und damit der erste Transistor T1 sperrt. Mittels einer Ausfallerkennungsleitung 8, die von dem Kollektor des Transistors T1 bzw. T2 zu der Abschalteinheit 6 führt, fließt nun ein Ausfallerkennungsstrom I_{A} zu der Abschalteinheit 6, mittels derer alle Zweige Z1, Z2, Z3 abgeschaltet werden - wie später noch erläutert wird. Die Transistoren T1, T2 dienen als Schaltelemente, die in Abhängigkeit von dem Vorliegen und Nichtvorliegen eines Zweigstromes I_{Z1}, I_{Z2} in den Leuchtdiodenzweigen Z1, Z2 durch Schalten entweder in den Normal-Schaltzustand oder in den Ausfall-Schaltzustand versetzt werden. Die Ströme I_{Z1}, I_{Z2} dienen als Zustandsgröße für die Leuchtdiodenzweige Z1, Z2. Sobald die Ströme I_{Z1}, I_{Z2} unter einen durch die Basiswiderstände R1, R2 bestimmten Stromschwellwert sinken, sperrt der Transistor T1 bzw. der Transistor T2, so dass der Ausfallerkennungsstrom I_{A} fließt. Als Schwellwert oder Vergleichswert, bei dessen Unterschreitung die Transistoren T1, T2 in den von dem Normal-Schaltzustand in den Ausfall-Schaltzustand übergehen, wird bestimmt durch den maximalen Strom, der bei einem Ausfall einer Leuchtdiode D im jeweiligen Stromzweig Z1, Z2 fließen würde. Im vorliegenden Ausführungsbeispiel liegt der Schwellwert knapp über I_{Z1} = 0 A. Bei Erreichen oder Unterschreiten dieses Schwellwertes wird das Ausfallerkennungssignal 8 erzeugt, das als Ausfallerkennungsstrom I_{A} die Abschalteinheit 6 aktiviert.

Die Verzögerungseinheit 5 bewirkt, dass beim Einschalten der Beleuchtungsvorrichtung die Stromvergleichseinheit 4 nicht schon das Ausfallerkennungssignal I_{A} erzeugt, obwohl noch kein Ausfall mindestens einer der Leuchtdioden D erkannt worden ist. Beim Einschalten der Beleuchtungsvorrichtung ist nämlich der Strom in den Leuchtdiodenzweigen Z1, Z2 noch so niedrig, dass die Transistoren T1, T2 in den Sperrzustand versetzt werden würden. Damit dies nicht geschieht, weist die Verzögerungseinheit 5 einen pnp-Transistor T3 auf, dessen Emitter an den positiven Pol der Versorgungsspannung Uᵥ, der Kollektor an die beiden Transistoren T1, T2 enthaltenen Zweige und über den Widerstand R3 an den Pluspol der Versorgungsspannung Uᵥ und über eine Zenerdiode ZD₁ an Masse angeschlossen sind. Der Transistor T3 wird beim Einschalten erst leitend, wenn die Versorgungsspannung Uᵥ einen Wert erreicht hat, der größer ist als die Fließspannung der Leuchtdioden D. Erst wenn der Transistor T3 leitend geschaltet ist, kann der Strom I_{Z3} fließen, bei Ausfall gegebenenfalls die Transistoren T1 und/oder T2 das Ausfallerkennungssignal I_{A} aktivieren. Die Verzögerungseinheit 5 dient somit zur Verzögerung der Ausfallerkennung insbesondere beim Einschalten der Beleuchtungsvorrichtung. Erst wenn der dritte Transistor T3 durchschaltet, kann die Ausfallüberwachung bzw. Ausfallerkennung erfolgen.

Die Fließspannung ist die Spannung einer Diodenkennlinie, zu der die Leuchtdiode D durchschaltet und ein entsprechend hoher Durchlassstrom I_{Z1} bzw. I_{Z2} fließt zur Erzeugung eines vorgegebenen Spektrums der Leuchtdiode D. Die Flussspannung ist somit die Durchlassspannung der Leuchtdioden D, bei deren Erreichen oder Überschreiten ein das Leuchten der Leuchtdioden D bewirkender Durchlassstrom fließt.

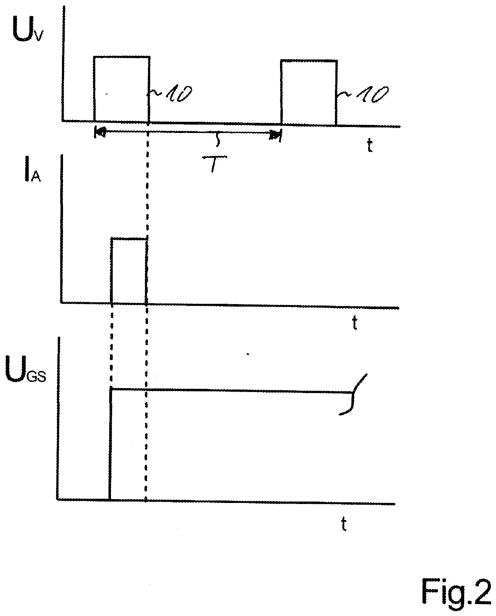

Die Abschalteinheit 6 weist als Schaltelemente unipolare Transistoren, nämlich einen n-Kanal MOSFET V1 und einen zweiten n-Kanal MOSFET V2 auf. Diese Feldeffekttransistoren V1, V2 befinden sich jeweils in einer Sourceschaltung, wobei der erste Feldeffekttransistor V1 eingangsseitig an einem Kondensator C1 angeschlossen ist, zu dem parallel eine Zenerdiode ZD₂ und ein Widerstand R4 parallel geschaltet sind. Der Kondensator bildet einen Ausfall-Schaltzustandshalter 9, mittels dessen der Feldeffekttransistor V1 so lange in Durchlassstellung gehalten ist, bis bei Ausführung der Beleuchtungsvorrichtung als Blinkleuchte ein nächster Impuls 10 der Versorgungsspannung Uᵥ erfolgt. Hierdurch wird sichergestellt, dass bei Ausfall einer Leuchtdiode D die Leuchtdiodenzweige Z1, Z2 abgeschaltet bleiben, obwohl der Ausfallerkennungsstrom I_{A} bereits wieder zu Null geworden ist. Ein ansonsten auftretendes unerwünschtes Aufblitzen der Beleuchtungsvorrichtung kann somit sicher vermieden werden. Wie aus Figur 2 ersichtlich ist, bleibt im Fehlerfall die Gatesourcespannung U_{GS} aufgrund des aufgeladenen Kondensators C1 erhalten, obwohl der Ausfallerkennungsstrom I_{A} nicht mehr fließt. Der Kondensator C1 weist eine solche Kapazität auf, dass die Gastesourcespannung U_{GS} des Transistors V1 und damit das Durchschalten des Transistors V1 so lange wie eine Taktdauer T (Periodendauer T) eines Impulsgebers für den Fahrtrichtungsanzeiger gewährleistet ist.

Fließt der Ausfallerkennungsstrom I_{A}, wird der Kondensator C1 aufgeladen und versetzt den ersten Feldeffekttransistor V1 in eine Durchlassstellung, die bewirkt, dass die Gatespannung des zweiten Feldeffekttransistors V2 gegen Null geht und somit der zweite Feldeffekttransistor V2 von einer Durchlassstellung in eine Sperrstellung verbracht wird. In der Sperrstellung des zweiten Feldeffekttransistors V2 werden die Zweige Z1, Z2, Z3 abgeschaltet, da der Drainanschluss des Feldeffekttransistors V2 mit den drei Zweigen Z1, Z2, Z3 verbunden ist. Der Sourceanschluss des Transistors V2 ist mit dem Masseanschluss des Bordnetzes verbunden. Die am Gateanschluss des Transistors V2 anliegenden Bauelemente, nämlich der Kondensator C2, der Widerstand R5 und die Zenerdiode ZD₃ bewirken, dass im Normal-Schaltzustand der Stromvergleichseinheit 4 der Feldeffekttransistor V2 leitend geschaltet ist, so dass die entsprechenden Zweigströme I_{Z1}, I_{Z2}, I_{Z3} fließen können. Die parallel geschalteten Bauelemente ZD₃, R5 und C2 sind über einen weiteren Widerstand R6 mit dem Pluspol der Versorgungsspannung Uᵥ verbunden.

Die an den Gateanschlüssen der Feldeffekttransistoren V1, V2 anliegenden Zenerdioden ZD2, ZD3 in Verbindung mit den jeweiligen Widerständen R4 bzw. R5, R6 bilden eine Spannungsstabilisierung.

Nach einer nicht dargestellten alternativen Ausführungsform kann der Ausfall-Schaltzustandhalter 9 auch entfallen, insbesondere dann, wenn es sich nicht um eine Beleuchtungsvorrichtung für einen Fahrtrichtungsanzeiger handelt.

Es versteht sich, dass die Beleuchtungsvorrichtung auch mehr als zwei Leuchtdiodenzweige Z1, Z2 aufweisen kann. Mit jedem weiteren Leuchtdiodenzweig wird ein paralleler Teilzweig mit einem Transistor und einem Kollektorwiderstand dem dritten Zweig Z3 hinzugefügt, wobei die Basis des Transistors mit dem zusätzlichen Leuchtdiodenzweig verbunden ist.

## Patentansprüche

1. Verfahren zur Ausfallerkennung von Leuchtdioden in einem Fahrzeug, wobei eine Zustandsgröße eines die mindestens eine Leuchtdiode aufweisenden Leuchtdiodenzweiges verglichen wird mit einem Vergleichswert und in Abhängigkeit von diesem Vergleich ein Ausfallerkennungssignal erzeugt wird,
wobei
als Zustandsgröße ein durch den Leuchtdiodenzweig (Z1, Z2) fließender Zweigstrom (I_{Z1}, I_{Z2}) erfasst wird und dass ein Ausfallerkennungssignal (I_{A}) erzeugt wird, sobald der Zweigstrom (I_{Z1}, I_{Z2}) den Vergleichswert unterschreitet, **dadurch gekennzeichnet, dass** bei Einschalten des Leuchtdiodenzweiges (Z1, Z2) der Vergleich der Zustandsgröße zu dem Vergleichswert so lange verzögert wird, bis an der mindestens einen sich in dem Leuchtdiodenzweig (Z1, Z2) befindlichen Leuchtdiode (D) eine Durchlassspannung erreicht oder überschritten wird.

2. Verfahren nach Anspruch 1, **dadurch gekennzeichnet, dass** das Ausfallerkennungssignal (I_{A}) in Form eines Stromflusses eine in Reihe zu mindestens zwei Leuchtdiodenzweigen (Z1, Z2) geschalteten Abschalteinheit (6) aktiviert, mittels derer alle Leuchtdiodenzweige (Z1, Z2) abgeschaltet werden.

3. Schaltungsanordnung für die Ausfallerkennung von Leuchtdioden einer Beleuchtungsvorrichtung in einem Fahrzeug mit mindestens einem Leuchtdiodenzweig enthaltend eine Anzahl der Leuchtdioden und einer Ausfallerkennungseinrichtung, die aufweist
- Mittel zum Vergleichen einer Zustandsgröße des mindestens einen Leuchtdiodenzweiges mit einem Vergleichswert,
- Mittel zum Schalten zur Ausgabe eines Ausfallerkennungssignals in Abhängigkeit von dem Vergleich zwischen der Zustandsgröße des mindestens einen Leuchtdiodenzweiges und dem Vergleichswert,
wobei als Mittel zum Vergleichen und Schalten vorgesehen sind
- eine Stromvergleichseinheit (4), in der als die Zustandsgröße ein durch mindestens einen Leuchtdiodenzweig (Z1, Z2) fließender Zweigstrom (I_{Z1}, I_{Z2}) auf Unterschreiten eines vorgegebenen Schwellwertes überprüft wird und dass bei Unterschreiten des Schwellwertes das Ausfallerkennungssignal (I_{A}) erzeugt wird,
**dadurch gekennzeichnet, dass** die Mittel zum Vergleichen und Schalten weiter aufweisen
- eine Verzögerungseinheit (5), die derart auf die Stromvergleichseinheit (4) einwirkt, dass die Stromvergleichseinheit (4) nur dann aktiviert wird, wenn an mindestens einer der im Leuchtdiodenzweig (Z1, Z2) befindlichen Leuchtdioden (D) eine Durchlassspannung erreicht oder überschritten wird.

4. Schaltungsanordnung nach Anspruch 3, **dadurch gekennzeichnet, dass** das Ausfallerkennungssignal als ein Ausfallerkennungsstrom (I_{A}) ausgebildet ist, der auf eine Abschalteinheit (6) der Schaltungsanordnung einwirkt, die dazu eingerichtet ist, bei Auftreten des Ausfallerkennungsstromes (I_{A}) den mindestens einen Leuchtdiodenzweig (Z1, Z2) abzuschalten.

5. Schaltungsanordnung nach Anspruch 3 oder 4, **dadurch gekennzeichnet, dass** die Abschalteinheit (6) ein Schaltelement (V1, V2) aufweist, das dazu eingerichtet ist, bei Nichtvorliegen des Ausfallerkennungssignals (I_{A}) in einem Normal-Schaltzustand desselben den mindestens einen Leuchtdiodenzweig (Z1, Z2) durchzuschalten und bei Vorliegen des Ausfallerkennungssignals (I_{A}) in einem Ausfall-Schaltzustand desselben den mindestens einen Leuchtdiodenzweig (Z1) zu sperren.

6. Schaltungsanordnung nach Anspruch 5, **dadurch gekennzeichnet, dass** in der Abschalteinheit (6) ein Ausfall-Schaltzustandshalter (9) integriert ist, der dazu eingerichtet ist, das Schaltelement (V1, V2) in dem Ausfall-Schaltzustand desselben mindestens so lange wie eine Taktrate (T) eines Impulsgebers für einen Fahrtrichtungsanzeiger aufrechtzuerhalten.

7. Schaltungsanordnung nach Anspruch 6, **dadurch gekennzeichnet, dass** der Ausfall-Schaltzustandshalter (9) einen Kondensator (C1) umfasst, der bei Ausfallerkennung mit dem Ausfallerkennungsstrom (IA) aufladbar ist.

8. Schaltungsanordnung nach einem der Ansprüche 3 bis 7, **dadurch gekennzeichnet, dass** die Verzögerungseinheit (5) ein Schaltelement (T3) aufweist, das in Reihe zu dem mindestens einen Schaltelement (T1, T2) der Stromvergleichseinheit (4) einerseits und parallel zu dem mindestens einen Leuchtdiodenzweig (Z1, Z2) andererseits angeordnet ist.

9. Schaltungsanordnung nach Anspruch 8, **dadurch gekennzeichnet, dass** das Schaltelement (T3) der Verzögerungseinheit (5) als ein Transistor ausgebildet ist.

10. Schaltungsanordnung nach einem der Ansprüche 3 bis 9, dadurch gekennzeichet, dass die Stromvergleichseinheit (4) ein Schaltelement (T1, T2) umfasst, das dazu eingerichtet ist, in Abhängigkeit vom Vorliegen oder Nichtvorliegen des Zweigstromes (I_{Z1}, I_{Z2}) entweder in einen Normal-Schaltzustand versetzt zu werden, in dem kein Ausfallerkennungssignal (I_{A}) erzeugt wird, oder in einem Ausfall-Schaltzustand versetzt zu werden, in dem das Ausfallerkennungssignal (I_{A}) erzeugt wird.

11. Schaltungsanordnung nach Anspruch 10, **dadurch gekennzeichnet, dass** mindestens zwei Leuchtdiodenzweige (Z1, Z2) vorgesehen sind, denen jeweils ein Schaltelement (T1, T2) der Stromvergleichseinheit (4) zugeordnet ist, wobei die Schaltelemente (T1, T2) in einem zu den Leuchtdiodenzweigen (Z1, Z2) parallelen Stromzweig (Z3) angeordnet sind.

12. Schaltungsanordnung nach Anspruch 9 oder 10, **dadurch gekennzeichnet, dass** das Schaltelement (T1, T2) der Stromvergleichseinheit (4) als ein Transistor ausgebildet ist.

## Claims

1. A method for detecting failure of LEDs in a vehicle, wherein a state variable of a LED branch comprising the at least one LED is compared with a comparison value and a failure detection signal is generated depending on said comparison,
wherein
a branch current (I_{Z1}, I_{Z2}) flowing through the LED branch (Z1, Z2) is detected as the state variable and a failure detection signal (I_{A}) is generated as soon as the branch current (I_{Z1}, I_{Z2}) drops below the comparison value, **characterized in that** when the LED branch (Z1, Z2) is switched on the comparison of the state variable with the comparison value is delayed until such time as a forward voltage is attained or exceeded at the at least one LED (D) located in the LED branch (Z1, Z2).

2. The method according to Claim 1, **characterized in that** the failure detection signal (I_{A}) in the form of a current flux activates a switch-off unit (6) connected in series with at least two LED branches (Z1, Z2), by means of which switch-off unit all of the LED branches (Z1, Z2) are switched off.

3. An apparatus for detecting failure of LEDs of an illumination device in a vehicle having at least one LED branch containing a number of the LEDs and a failure detection device which comprises
- means for comparing a state variable of the at least one LED branch with a comparison value,
- means for switching in order to emit a failure detection signal depending on the comparison between the state variable of the at least one LED branch and the comparison value,
wherein
there are provided as means for comparing and switching:
- a current comparison unit (4) in which a branch current (I_{Z1}, I_{Z2}) flowing through at least one LED branch (Z1, Z2) is checked, as the state variable, to establish whether it has dropped below a predetermined threshold and that, if it should drop below the threshold, the failure detection signal (I_{A}) is generated,
**characterized in that** the means for comparing and switching further comprise
- a delay unit (5) which acts on the current comparison unit (4) such that the current comparison unit (4) is only activated, if a forward voltage is attained or exceeded in at least one LED (D) located in the LED branch (Z1, Z2).

4. The apparatus according to Claim 3, **characterized in that** the failure detection signal is configured as a failure detection current (I_{A}) which acts on a switch-off unit (6) of the apparatus, which is set up to switch off the at least one LED branch (Z1, Z2) in the event of the failure detection current (I_{A}) occurring.

5. The apparatus according to Claim 3 or 4, **characterized in that** the switch-off unit (6) comprises a switching element (VI, V2) which is set up to connect through the at least one LED branch (Z1, Z2), in the event that the failure detection signal (I_{A}) is not present in a normal switching state of the same, and to block the at least one LED branch (Z1), if the failure detection signal (I_{A}) is present in a failure switching state of the same.

6. The apparatus according to Claim 5, **characterized in that** a failure switching state holder (9) is integrated into the switch-off unit (6), which is set up to maintain the switching element (VI, V2) in the failure switching state of the same at least as long as a clock frequency (T) of a pulse generator for a turn indicator.

7. The apparatus according to Claim 6, **characterized in that** the failure switching state holder (9) includes a capacitor (C1) which can be charged up in the event of a failure being detected with the failure detection current (l_{A}).

8. The apparatus according to any one of Claims 3 to 7, **characterized in that** the delay unit (5) comprises a switching element (T3) which is arranged in series with the at least one switching element (T1, T2) of the current comparison unit (4) on the one hand, and parallel to the at least one LED branch (Z1, Z2) on the other hand.

9. The apparatus according to Claim 8, **characterized in that** the switching element (T3) of the delay unit (5) is configured as a transistor.

10. The apparatus according to any one of Claims 3 to 9, **characterized in that** the current comparison unit (4) includes a switching element (T1, T2) which is set up, depending on the presence or not of the branch current (I_{Z1}, I_{Z2}), to either be placed in a normal switching state in which no failure detection signal (I_{A}) is generated, or to be placed in a failure switching state in which the failure detection signal (I_{A}) is generated.

11. The apparatus according to Claim 10, **characterized in that** at least two LED branches (Z1, Z2) are provided, to each of which one switching element (T1, T2) of the current comparison unit (4) is assigned, wherein the switching elements (T1, T2) are arranged in a current branch (Z3) parallel to the LED branches (Z1, Z2).

12. The apparatus according to Claim 9 or 10, **characterized in that** the switching element (T1, T2) of the current comparison unit (4) is configured as a transistor.

## Revendications

1. Procédé de reconnaissance de panne de diodes électroluminescentes dans un véhicule automobile, sachant qu'une grandeur d'état d'au moins l'une des branches de diodes électroluminescentes, comprenant au moins une diode électroluminescente, est comparée avec une valeur de comparaison et qu'un signal de reconnaissance de panne est généré en fonction de cette comparaison, sachant que, comme grandeur d'état, est saisi un courant de branche (I_{z1}, I_{z2}), qui traverse la branche de diodes électroluminescentes (Z1, Z2), et qu'un signal de reconnaissance de panne (I_{A}) est généré dès que le courant de branche (I_{z1}, I_{z2}) descend au-dessous de la valeur de comparaison, **caractérisé en ce que,** lors de la mise sous courant de la branche de diodes électroluminescentes (Z1, Z2), la comparaison de la valeur d'état avec la valeur de comparaison est retardée jusqu'à ce qu'une tension à l'état passant soit atteinte ou surpassée sur la diode électroluminescente (D) au moins présente dans la branche de diodes électroluminescentes (Z1, Z2).

2. Procédé selon la revendication 1, **caractérisé en ce que,** sous la forme d'un flux de courant, le signal de reconnaissance de panne (I_{A}) active une unité de déconnexion (6), commutée en série par rapport à au moins deux branches de diodes électroluminescentes (Z1, Z2), au moyen de laquelle toutes les branches de diodes électroluminescentes (Z1, Z2) sont déconnectées.

3. Circuit de commutation pour la reconnaissance de panne de diodes électroluminescentes d'un dispositif d'éclairage dans un véhicule automobile, avec au moins une branche de diodes électroluminescentes comprenant un nombre de diodes électroluminescentes et une unité de reconnaissance de panne, qui présente :
- des moyens de comparaison d'une valeur d'état de la branche de diodes électroluminescentes au moins prévue avec une valeur de comparaison,
- des moyens de commutation pour l'émission d'un signal de reconnaissance de panne en fonction de la comparaison de la valeur d'état de la branche de diodes électroluminescentes au moins prévue avec la valeur de comparaison, sachant que, comme moyens de comparaison et de commutation, sont prévus :
- une unité de comparaison de courant (4), dans laquelle, le courant de reconnaissance de panne (I_{z1}, I_{z2}), qui traverse au moins une branche de diodes électroluminescentes (Z1, Z2), est contrôlé quant au sous-dépassement d'une valeur de seuil prédéterminée et le signal de reconnaissance de panne (I_{A}) est généré lorsque la valeur de seuil est sous-dépassée,
**caractérisé en ce que** les moyens de comparaison et de commutation présentent en plus :
- une unité de retard (5) qui agit sur l'unité de comparaison de courant (4) de telle manière que l'unité de comparaison de courant (4) ne soit activée que quand une tension à l'état passant est atteinte ou surpassée sur au moins l'une des diodes électroluminescentes (D) présentes dans la branche de diodes électroluminescentes (Z1, Z2).

4. Circuit de commutation selon la revendication 3, **caractérisé en ce que** le signal de reconnaissance de panne est formé en tant que courant de reconnaissance de panne (I_{A}) qui agit sur une unité de déconnexion (6) du circuit de commutation, qui est aménagée pour éteindre la branche de diodes électroluminescentes (Z1, Z2) au moins prévue, lors de l'apparition du courant de reconnaissance de panne (I_{A}).

5. Circuit de commutation selon revendication 3 ou 4, **caractérisé en ce que** l'unité de déconnexion (6) présente un élément de commutation (V1, V2) qui est aménagé pour que, lors de l'absence du signal de reconnaissance de panne (I_{A}), dans un état de commutation normal de celui-ci, il ouvre au moins une branche de diodes électroluminescentes (Z1, Z2) et que, lors de la présence du signal de reconnaissance de panne (I_{A}), dans un état de commutation panne de celui, il ferme la branche de diodes électroluminescentes (Z1, Z2) au moins prévue.

6. Circuit de commutation selon la revendication 5, **caractérisé en ce que,** dans l'unité de déconnection (6), est intégré un dispositif de maintien de l'état de commutation panne (9), qui est aménagé pour maintenir l'élément de commutation (V1, V2) dans l'état de commutation panne de celui-ci au moins pour la durée d'une fréquence d'horloge (T) d'un générateur d'impulsions pour un indicateur de direction de marche.

7. Circuit de commutation selon la revendication 6, **caractérisé en ce que** le dispositif de maintien de l'état de commutation panne (9) comprend un condensateur (C1) qui, lors de la reconnaissance d'une panne, peut être chargé avec le courant de reconnaissance de panne (I_{A}).

8. Circuit de commutation selon l'une des revendications 3 à 7, **caractérisé en ce que** l'unité de retard (5) présente un élément de commutation (T3), qui est disposé, d'une part, en série par rapport à au moins un élément de commutation (T1, T2) de l'unité de comparaison de courant (4) et, d'autre part, en parallèle par rapport à la branche de diodes électroluminescentes (Z1, Z2) au moins prévue.

9. Circuit de commutation selon la revendication 8, **caractérisé en ce que** l'élément de commutation (T3) de l'unité de retard (5) est réalisé sous la forme d'un transistor.

10. Circuit de commutation selon l'une des revendications 3 à 9, **caractérisé en ce que** l'unité de comparaison de courant (4) comprend un élément de commutation (T1, T2), qui est aménagé de manière à être mis, en fonction de la présence ou de l'absence du courant de branche (I_{z1}, I_{z2}), soit dans un état de commutation normal, dans lequel aucun signal de reconnaissance de panne (I_{A}) n'est généré, ou dans un état de commutation panne, dans lequel le signal de reconnaissance de panne (I_{A}) est généré.

11. Circuit de commutation selon la revendication 10, **caractérisé en ce que** sont prévues au moins deux branches de diodes électroluminescentes (Z1, Z2), à chacune desquelles est associé un élément de commutation (T1, T2) de l'unité de comparaison de courant (4), sachant que les éléments de commutation (T1, T2) sont disposés dans une branche de courant (Z3) parallèle aux branches de diodes électroluminescentes (Z1, Z2).

12. Circuit de commutation selon revendication 9 ou 10, **caractérisé en ce que** l'élément de commutation (T1, T2) de l'unité de comparaison de courant (4) est réalisé sous la forme d'un transistor.
